# EUROPÄISCHE PATENTSCHRIFT

(11) **EP 1 168 553 B1**
(45) Veröffentlichungstag und Bekanntmachung des Hinweises auf die Patenterteilung: **22.09.2010**
(21) Anmeldenummer: 01440086.5
(22) Anmeldetag: 26.03.2001
(51) Int. Cl.: H02B 13/065

(54) **Störlichtbogenbegrenzer für eine gasisolierte Schaltanlage**
ARC protection device for a gas insulated switchgear
Dispositif de prévention d'arc pour installation de commutation à isolation gaseuse

(30) Priorität: 28.06.2000 DE 10031561
(43) Veröffentlichungstag der Anmeldung: 02.01.2002
(73) Patentinhaber: AREVA T&D SA, 92084 Paris La Defense (FR)
(72) Erfinder: Hiltner, Robert, 93170 Hackenberg (DE)
(74) Vertreter: Dreiss

(56) Entgegenhaltungen:
- EP-A- 0 707 364
- DE-A- 3 131 417

## Beschreibung

Die Erfindung betrifft einen Störlichtbogenbegrenzer für eine gasisolierte Schaltanlage, insbesondere Mittelspannungs-Schaltanlage, nach dem Oberbegriff des Anspruchs 1 sowie die damit ausgestattete Schaltanlage nach dem Oberbegriff des nebengeordneten Anspruchs.

Schaltanlagen mit Schaltern und sonstigen Schaltanlagenkomponeten in einer gasdichten Metallkapselung, in denen sich ein Gas als Isolationsmedium befindet, wie beispielsweise SF6, N2 oder Trockenluft, sind seit vielen Jahren bekannt. Diese Schaltanlagen werden nicht nur zum Schalten von Hochspannungen (größer 72 kV) verwendet, sondern werden immer mehr auch im sogenannten Mittelspannungsbereich bis herab zu wenigen kV eingesetzt. Die kompakte Struktur, Zuverlässigkeit und Wartungsfreundlichkeit sind einige der Gründe für die Popularität derartiger Schaltanlagen. Es kann jedoch nicht völlig ausgeschlossen werden, dass es, hervorgerufen durch Vorgänge im Inneren oder außerhalb der Schaltanlage (zB. aufgrund von Überspannungen oder Blitzschlägen), zu Situationen kommt, die zu einem Störlichtbogen innerhalb der Anlage führen. Die Sicherheit von Personen, die sich in der Nähe der Anlage befinden, ist unter anderem deshalb gefährdet, weil der auftretende Lichtbogen einen großen Druck aufbaut, der dazu führen kann, dass das Gas aus dem gasgefüllten Druckbehälter entweicht. Außerdem können Lichtbogen-Zersetzungs-produkte auftreten, die im Fall von SF6- Anlagen als gesundheitlich nicht unbedenklich anzusehen sind.

Aus der Patentschrift DE 36 06 770 C2 ist eine gasisolierte Mittelspannungs-Schaltanlage mit einem Störlichtbogenbegrenzer bekannt. Dort werden im Falle einer in dem gasisolierten Tank auftretenden Druckerhöhung die in der Schaltanlage ohnehin für die betriebsmäßige Erdung vorhandenen drei Erdungsschalter, die den einspeisenden Leitungen (Stromleitern) zugeordnet sind und zum Zwecke einer sofortigen Einschaltung einen vorgespannten Energiespeicher aufweisen, mittels eines druckbetätigten Auslösemechanismus ausgelöst , um eine gleichzeitige Erdung zu bewirken. Das dort vorgeschlagene System ist schon allein auf Grund der hohen Anzahl an Erdungsschaltern und der dort beschriebenen Mechanik sehr kompliziert aufgebaut. Ferner kommt es aufgrund der Zeitkette Behälterverformung, Bewegung des stark massenbehafteten Auslösegestänges und Eigenschaltzeit des Erdungsschalter zu einer insgesamt relativ langen Zeit bis zum metallischen Kurzschließen des offen brennenden Störlichtbogens.

Aus der DE 43 02 416 A1 ist eine Schaltungsanlage bekannt, bei der, neben den in der Schaltanlage für eine betriebsmäßige Erdung bereits vorhandenen Erdungsschaltern, zusätzlich eine automatische Erdungsvorrichtung vorgesehen ist, die mit drei als Betätigungsarme ausgebildeten Erdungsschaltern ausgerüstet ist. Diese Anlage enthält jedoch ebenfalls viele mechanische Bauteile, die recht kompliziert zueinander angeordnet sind und vor allem einen erheblichen zusätzlichen Raumbedarf erforderlich machen.

Aufgabe der Erfindung ist es, einen einfach konstruierten Störlichtbogenbegrenzer und eine damit ausgestattete Schaltungsanlage zu schaffen.

Die Aufgabe wird gelöst durch einen Störlichtbogenbegrenzer mit den Merkmalen des Anspruchs 1 sowie durch eine Schaltanlage mit den Merkmalen des nebengeordneten Anspruchs 10. Besonders vorteilhafte Ausgestaltungen der Erfindung werden durch die abhängigen Ansprüche 2 bis 9 und 11 angegeben.

Demnach wird Störlichtbogenbegrenzer für eine gasisolierte Schaltanlage, insbesondere Mittelspannungs-Schaltanlage, vorgeschlagen mit einem gasgefüllten Druckbehälter , in dem drei Stromleiter angeordnet sind, und mit einem druckbetätigtem Auslösemechanismus, der auf eine Druckerhöhung im Druckbehälter reagiert und einen vorgespannten Energiespeicher auslöst, wobei der mittlere der drei Stromleiter mindestens eine drehbar gelagerte und von dem Auslösemechanismus bei Druckerhöhung aus ihrer Anfangsstellung heraus bewegbare Kurzschlussbrücke aufweist, die in ihrer Endstellung alle drei Stromleiter leitend miteinander verbindet. In einer besonderen Ausgestaltung der Erfindung besteht die Kurzschlussbrücke aus einem Schaltmesserpaar, wobei der mittlere Stromleiter zwischen den beiden Schaltmessern verläuft und sich auch die Kontaktierungsstellen auf den beiden Außenleitern zu beiden Seiten der jeweiligen Stromleiter befinden. Die beiden Schaltmesser der Kurzschlussbrücke sind in geeigneter Weise kontaktkrafterzeugend und verdrehfest miteinander verbunden.

In einer weiteren Ausgestaltung der Erfindung sind auf dem mittleren Stromleiter zwei von dem Energiespeicher bei Druckerhöhung aus ihrer Ausgangslage heraus gegensinnig bewegbare Teilleiter der Kurzschlussbrücke vorhanden, die in ihren Einschalt-Endstellungen alle drei Stromleiter leitend miteinander verbinden.

In einer weiteren Ausgestaltung der Erfindung sind auch diese Teilleiter der Kurzschlussbrücke als Paare beidseitig der mittleren Strombahn, mit beidseitigen Einschlagstellen auf den Stromschienen der Außenleiter ausgeführt. Die beiden Teilleiter eines Teilleiterpaares der Kurzschlussbrücke sind jeweils in geeigneter Weise kontaktkrafterzeugend und verdrehfest miteinander verbunden.

Es ist hervorzuheben, dass auch Kombinationen dieser Lösungen, insbesondere mit paarweiser Schaltmesseranordnung auf nur einer Seite der Stromschienen, möglich sind.

Durch diese Maßnahmen wird erreicht, dass lediglich eines oder zwei bewegliche, leitende Materialstücke, nämlich die Kurzschlussbrücken selbst, benötigt werden, um die Stromleiter im Falle eines auftretenden Störlichtbogens kurz zu schließen. Hinzu kommt die auf Grund der drehbaren Lagerung sehr einfach, aber dennoch sehr präzise, auszuführende Bewegung der Kurzschlußbrücken. Demnach kann die hier vorgeschlagene Konstruktion mit nur wenigen Bauteilen, vorzugsweise mit Serienteilen von einfacher geometrischer Form, aufgebaut werden und dennoch eine sehr sichere Funktion garantieren. Außerdem sind auf Grund der wenigen bewegten Bauteile auch nur kleine Massen zu bewegen, was wiederum zu sehr kurzen Schaltzeiten führt und zudem einen sehr geringen Kraftaufwand für den von einem druckbetätigten Auslösemechanismus ausgelösten Energiespeicher bedeutet.

Eine weitere Ausgestaltungsform der Kurzschlussbrücke des Störlichtbogenbegrenzers besteht darin, dass am mittleren der drei Stromleiter nebeneinander mindestens zwei Teilleiter einer Kurzschlussbrücke drehbar gelagert sind. Diese Teilleiter tragen jeweils einendig einen Drehpunkt, werden bei Betätigung gegensinnig bewegt und sind in ihrer Länge so bemessen, dass sie einen Außenleiter mit dem Mittelleiter verbinden können.

Die Ausführung des Kurzschlussbegrenzers mit einer Kurzschlussbrücke aus mindestens zwei Teilleitern ist gegenüber der erstbeschriebenen Lösung mit einer mittig gelagerten, einteiligen Kurzschlussbrücke zwar etwas aufwendiger, benötigt jedoch längs des Mittelleiters wesentlich weniger Einbauraum. Ferner lässt sich die Einbaurichtung in der Schaltanlage bewusst so festlegen, dass die elektrodynamischen Kräfte aufgrund des Kurzschlussstromflusses eine eindeutig schließende Kraftwirkung auf die in Schließstellung befindlichen Teilleiter der Kurzschlussbrücke ausüben und somit öffnende Komponenten völlig verhindert werden.

Da der Zufluss des Kurzschlussstromes immer über die äußeren Zuleitungen erfolgt, sind die Teilleiter der Kurzschlussbrücke am Mittelleiter so zu lagern, dass die ausschwenkbaren Enden der Teilleiter in der ausgeschalteten Stellung in Richtung des Energiezuflusses blicken.

In dieser Ausgestaltungsform der Kurzschlussbrücken aus Teilleitern ist eine einfache Ausführung mit je einem rechten und einen linken Teilleiter und eine solche mit je einem rechten und linken Teilleiterpaar denkbar, wobei im ersteren Fall an den Außenleitern vorteilhafterweise U-förmig (taschenförmige) Einschlagkontakte vorgesehen sind, während im zweiten Fall je ein Teilleiter eines Paares über bzw. unter dem Mittelleiter angebracht ist und die Außenleiter auch jeweils auf deren Ober -bzw. Unterseite kontaktiert.

Die Kurzschlußbrücke des vorgeschlagenen Störlichtbogenbegrenzers funktioniert unabhängig von der Stellung von vorhandenen Erdungs- und Lasttrennschaltern sowie deren Verriegelung und ist somit immer einsatzbereit. Auch wird zusätzlich nur unwesentlich elektrisch beanspruchter Raum in der Nähe der stromführenden Teile benötigt. Ein Drucksensor, der damit verbundene Auslösemechanismus und der Energiespeicher können in einem nicht spannungsbeanspruchten Bereich plaziert werden.

Weitere besondere Vorteile ergeben sich aus den Unteransprüchen.

Demnach ist es besonders vorteilhaft, wenn die Stromleiter parallel im gleichen Abstand zueinander verlaufend angeordnet sind und wenn die Kurzschlussbrücke und zumindest die mit ihr in Berührung kommenden Teile der Stromleiter kontaktflächenartig ausgebildet sind. Dadurch wird erreicht, dass die Teile der Kurzschlußbrücke, die etwa eines oder mehrere zur Drehachse symmetrisch ausgebildete flache und relativ leichte Metallteile sein können, alle drei Stromleiter sehr schnell und exakt gleichzeitig miteinander verbindet.

Besonders vorteilhaft ist es auch, wenn die Stromleiter und die Kurzschlussbrücke sich in dem metallgekapselten Bereich der Kabeleingangsfelder der Schaltanlage befinden. Dadurch ist eine sehr kompakte Bauweise und zudem eine elektromagnetische Abschirmung des ganzen Störlichtbogenbegrenzers gegeben. Diese spezielle Bauweise ist besonders gut für den Einbau in kleinere Schaltanlagen geeignet.

Außerdem ist es von besonderem Vorteil, wenn der Auslösemechanismus bei Druckerhöhung eine vorgespannte Schalterwelle freigibt, die mittels eines Verbindungsgestänges aus Isolierstoff die Teile der Kurzschlussbrücke aus der Anfangsstellung in die Endstellung dreht. Damit wird eine sehr einfache, aber funktionssichere Herstellung einer Kurzschlussverbindung aller drei Phasen des elektrischen Netzes erzielt. In diesem Zusammenhang ergibt sich ein weiterer Vorteil, wenn die Schalterwelle einen Hebel aufweist, der mit einem Ende des Verbindungsgestänges verbunden ist, und wenn die Kurzschlussbrücke einen Hebel ausweist, der mit dem anderen Ende des Verbindungsgestänges verbunden ist. Durch geeignete Abstimmung der Hebelradien und Hebelstellungen können ein auf die dynamischen Gegenkräfte optimal abgestimmter Drehmomentenverlauf und eine möglichst kleine Kurzschluss-Schaltzeit erzielt werden.

Vorteilhaft werden alle energieeinspeisenden Abzweige einer Schaltanlage mit der
beschriebenen Vorrichtung ausgestattet. Bei einer Ringkabelschaltanlage kann dies z.B. bedeuten, dass zwei oder sogar drei Störlichtbogenbegrenzer vorgesehen sind, die von einer gemeinsamen Schalterwelle angetrieben werden.

Die Erfindung sowie die sich daraus ergebenden Vorteile werden nun näher beschrieben anhand mehrerer Ausführungsbeispiele und unter Bezugnahme auf die folgenden Zeichnungen, die fünf schematische Querschnitts-Darstellungen wiedergeben:
- Fig. 1,: die einen erfindungsgemäßen Störlichtbogenbegrenzer im ersten Querschnitt zeigt,
- Fig. 2,: die den Störlichtbogenbegrenzer im zweiten, dazu parallelem Querschnitt zeigt,
- Fig.2a,: die einen Störlichtbogenbegrenzer mit einem Kurzschlussbrückenpaar zeigt,
- Fig. 3,: die den Störlichtbogenbegrenzer in einem dazu senkrechten Schnitt (Draufsicht) zeigt,
- Fig. 4,: die eine Ausführungsform des Störlichtbogenbegrenzers mit einer Kurzschlussbrücke aus Teilleitern im Querschnitt zeigt,
- Fig. 4a,: die einen Störlichtbogenbegrenzer mit paarweisen Teilleitern zeigt, und
- Fig. 5,: die den Störlichtbogenbegrenzer mit Teilleitern in einen dazu senkrechten Schnitt (Draufsicht) zeigt.

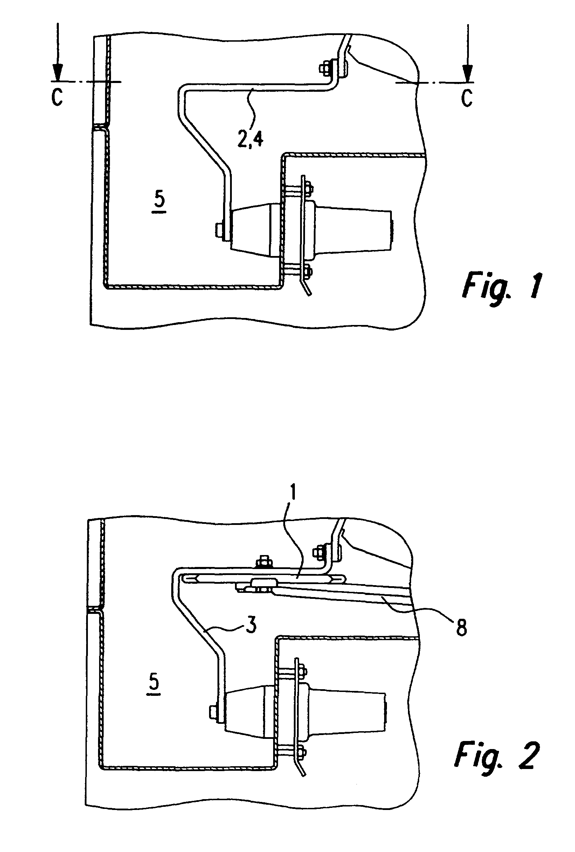

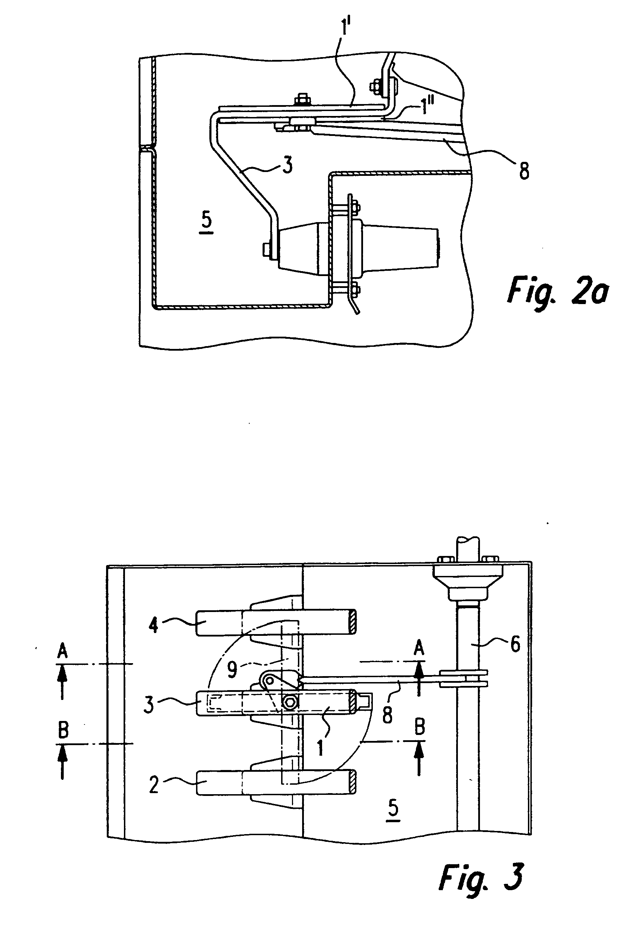

Die Figur 1 zeigt in einem ersten Querschnitt (Schnitt A-A) den Aufbau eines erfindungsgemäßen Störlichtbogenbegrenzers, im Nachfolgenden auch Kurzschließer genannt, mit einem gasgefüllten Druckbehälter 5, der mit einem Schutzgas, in diesem Beispiel mit SF6, gefüllt ist. Ferner zeigt die Figur 1 einen Stromleiter 4 von drei Stromleitern, die mit nicht dargestellten Lasttrennschaltern verbunden sind. Die Darstellung in Fig. 1 gilt für beide äußeren Stromleiter 2 oder 4, wie ein Vergleich mit der Fig. 3 zeigt. Die insgesamt drei Stromleiter sind den drei Phasen des Drehstromnetzes zugeordnet und dienen im Wesentlichen der Zuleitung elektrischer Energie in die Schaltanlage. Hervorgerufen durch innere oder äußere Vorgänge (z.B. Überspannungen durch Blitzschläge) können die genannten, unerwünschten Störlichtbögen auftreten, die zu der eingangs beschriebenen Druckerhöhung im gasgefüllten Druckbehälter 5 führen.

Die Figur 2 zeigt in einem zweiten Querschnitt (paralleler Schnitt B-B) die erfindungsgemäße Befestigung einer drehbar gelagerten Kurzschlussbrücke 1 an dem mittleren Stromleiter 3. Die drei Stromleiter sind vorzugsweise als flache Stromschienen ausgeführt und auch die Kurzschlußbrücke 1 ist als flaches mit Kontaktflächen versehenes Leiterteil ausgebildet. Dadurch ist im Falle von auftretenden Lichtbögen ein wirkungsvoller Kurzschluss der drei Stromleiter gegeben, so dass der Störlichtgbogen schnell erlischt und der Gasdruck im Druckbhälter 5 nicht weiter ansteigt.

Die Kurzschlussbrücke 1 ist unterhalb eines geraden Stücks der mittleren Stromschiene 3 mittels einer Niet oder Schraubverbindung so befestigt, dass diese Kontakt mit der Stromschiene 3 hat und dennoch leicht gedreht werden kann. Zur Drehung der Kurzschlussbrücke 1 ist diese mit einem Verbindungsgestänge 8 verbunden, dass von einem nicht dargestellten Auslösemechanismus bewegt wird. Der Auslösemechanismus reagiert auf eine überkritische Druckerhöhung im Druckbehälter 5 und bewegt das Verbindungsgestänge 8, dass wiederum die Kurzschlussbrücke 1 aus ihrer Anfangsposition um 90 Grad in eine Endposition dreht, in der dann die Kurzschlussbrücke 1 alle drei Stromschienen miteinander verbindet. Das Verbindungsgestänge 8 ist aus einem Isolierstoff gefertigt, um den Auslösemechanismus elektrisch von den stromführenden Teilen zu trennen.

Zur sicheren Kontaktierung der Kurzschlussbrücke 1 mit den beiden äußeren Stromleitern 2 und 4 können diese mit nicht dargestellten U-förmigen (taschenförmigen) Einschlagkontakten bestückt sein, in die die beiden Enden der Kurzschlussbrücke 1 einschlagen. Gemäß Figur 2a trägt die mittlere Stromschiene ein Paar von Kurzschlussbrücken, die durch geeignete Federung der beiden Kontaktmesser zueinander, sowohl an der mittleren Stromschiene 3 als auch auf den beiden äußeren Leitern 2 und 4 kontaktieren.

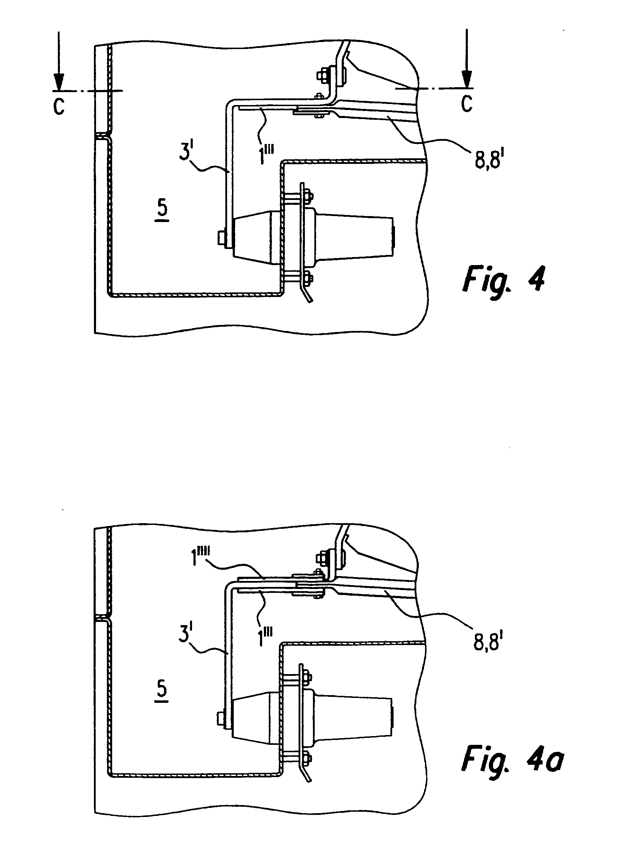

Die Figur 3 zeigt in einer dritten Ansicht (Draufsicht) den Aufbau des Kurzschließers. Wie dort zu sehen ist, sind die drei Stromleiter 2, 3,und 4 parallel und im selben Abstand zueinander angeordnet. Die an dem mittleren Stromleiter 3 drehbar befestigte Kurzschlussbrücke 1 ist symmetrisch aufgebaut und schließt damit beim Erreichen ihrer Endstellung 9 exakt gleichzeitig alle drei Stromleiter kurz. Zum Drehen der Kurzschlussbrücke 1 weist diese einen Hebel auf, an den das eine Ende des Verbindungsgestänges 8 angreift. Das andere Ende des Verbindungsgestänges 8 ist mit einem Hebel einer Schalterwelle 6 verbunden, die Teil des automatischen Auslösemechanismus ist. Die Schalterwelle 6 ist im ausgeschalteten Zustand durch eine in einer Auslösevorrichtung abgestützte Feder vorgespannt, die bei einer übergroßen Druckerhöhung im Druckbehälter 5 eine Teildrehung der Schalterwelle 6 bewirkt. Die Freigabeschwelle der Schalterwelle 6 wird durch die veränderbare Auslösekraft an der Auslösevorrichtung festgelegt. Durch die ausgelöste Drehung der Schalterwelle 6 wird über den Hebel an der Schalterwelle 6 das Verbindungsgestänge 8 bewegt und über den Hebel an der Kurzschlussbrücke die Kurzschlussbrücke um ca. 90 Grad exakt in die Endposition 9 (Kurzschlussstellung) gedreht. Die Figuren 4 , 4 a und 5 zeigen weitere Ausführungen der Erfindung. Es werden hier Kurzschlussbrücken vorgeschlagen, die aus mehreren Teilleitern bestehen, die mit einem Ende drehbar an der mittleren Stromschiene gelagert sind und mit dem freien Ende zu einem der benachbarten Stromleiter schwenken, um einen Kurzschluss zu bewirken.

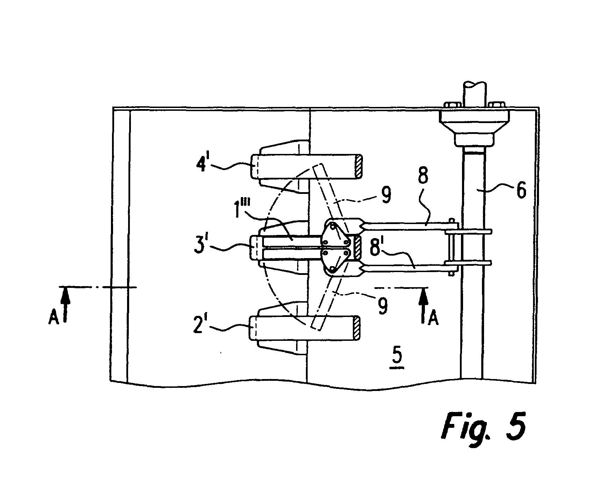

Der in der Figur 4 dargestellte Störlichtbogenbegrenzer hat eine zweiteilige Kurzschlussbrücke. In dem Druckbehälter 5 befinden sich die darin angeordneten Stromleiter, von denen hier lediglich der mittlere Stromleiter 3' dargestellt ist. An diesem Stromleiter 3' sind an der Unterseite zwei Teilleiter 1''' angebracht, die gegensinnig zu den benachbarten Stromleitern schwenkbar gelagert sind (siehe auch Figur 5). Im Vergleich mit der Ausführung nach Figur 1 zeigt sich, dass in diesem Beispiel die Kurzschlussbrücke 1''' aus zwei kurzen Teilleitern gebildet wird, die jeweils nur etwa halb so lang sind wie die Kurzschlussbrücke 1 in der Figur 1. Deshalb kann die Konstruktion nach der Figur 4 besonders kompakt ausgeführt werden. Außerdem können auch die Stromschienen sehr kurze Schenkel aufweisen, so wie es in der Figur 4 anhand der mittleren Stromschiene 3' dargestellt ist. Deshalb kann diese Variante des Störlichtbogenbegrenzers sehr raumsparend aufgebaut werden. Dasselbe gilt auch für die in der nächsten Figur 4a dargestellten Variante.

In der Figur 4 a sind nun sowohl am unteren Teil der mittleren Stromschiene 3' als auch an ihrem oberen Teil jeweils Kurzschlussbrücken 1''' und 1'''' paarweise angebracht. Durch diese Kurzschlussbrückenpaare wird der Kontakt im Kurzschlussfall wesentlich verbessert. Auch hier bestehen die oberen und unteren Kurzschlussbrücken 1''' und 1'''' jeweils aus zwei gegenseitig schwenkbar gelagerten Teilleitern.

In der Figur 5 ist in einer Draufsicht der Aufbau des Störlichtbogenbergrenzers dargestellt. Im Vergleich zu der Darstellung in Figur 3 zeigt sich, dass hier nicht eine längensymmetrisch und einstückig ausgebildete Kurzschlussbrücke verwendet wird, sondern jeweils zwei aus Teilleitern bestehende Kurzschlussbrücken 1''' und 1'''', die jeweils eine nur halb so lange Baulänge aufweisen. Dadurch kann der Störlichtbogenbegrenzer zum einen sehr kompakt ausgestaltet werden und zum anderen sind die zu bewegenden Massen (Teilleiter) geringer, so dass eine noch kürzere Schaltzeit erreicht werden kann. Um die Teilleiter zu drehen enthält die Mechanik in dem Beispiel nach Figur 5 zwei Verbindungsgestänge 8 und 8', die über die Schalterwelle 6 bewegt werden und jeweils ein Paar von den Teilleitern der Kurzschlussbrückenanordnung auslenken. Somit schwenkt ein Teilleiterpaar von der mittleren Stromschiene 3' zu der benachbarten Stromschiene 4' und das andere Teilleiterpaar von der mittleren Stromschiene 3' zu der anderen benachbarten Stromschiene 2'. Durch nicht dargestellte U-förmige Einschlagkontakte werden die Kurzschlussstellung definiert. Die durch die paarweise Anordnung der Teilleiter gebildeten Kurzschlussbrücken kontaktieren im Kurzschlussfall sowohl mit dem unteren sowie mit dem oberen Teil der Stromschienen 2', 3' und 4', so dass der Kurzschluss sehr hergestellt wird.

Die Abmessung der gezeigten Konstruktion sind derart proportioniert, dass die Kurzschlussbrücke sehr rasch bewegt wird, um entsprechend kurze Schaltzeiten zu erreichen.
Hierfür sind besonders die Hebellängen recht kurz gehalten und die Drehlagerung der Kurzschlussbrücke 1 möglichst reibungsarm gestaltet. Rechnungen beweisen, dass Schaltzeiten von nur wenigen Millisekunden erzielt werden können. Diese sehr guten Ergebnisse sind auch darauf zurückzuführen, dass nur sehr wenig Materialmassen, im Wesentlichen nur die Masse der Kurzschlussbrücke 1 selbst, bewegt werden muss.

Die beschriebene Konstruktion zeichnet sich auch dadurch aus, dass sie sehr kompakt ausgeführt ist, insbesondere dann, wenn sie in das Kabeleingangsfeld der Schaltanlage integriert wird. Ferner ist der vorgeschlagene Störlichtbogenbegrenzer sehr kostengünstig zu realisieren, da sein Aufbau nur wenige Bauteile, vorzugsweise Serienteile von unkomplizierter geometrischer Form, erfordert. Zudem funktioniert die vorgeschlagene Kurzschlussbrücke unabhängig von der Stellung der Erdungs-und Lasttrennschalter und deren Verriegelung und ist somit immer einsatzbereit.

Bei Schaltanlagen mit mehreren energieeinspeisenden Abzweigen wird vorteilhaft jeder dieser Abzweige mit einem eigenen Störlichtbogenbegrenzer ausgestattet. Alle Störlichtbogenbegrenzer einer Schaltanlage können bei kompakten Aufbau der Schaltanlage, wie z. B. bei einer Ringkabelschaltanlage, von nur einer Schalterwelle betätigt werden.

Die Erfindung ist besonders für kompakte Mittelspannungs-Schaltanlagen geeignet. Jedoch können mit dem vorgeschlagenen Kurzschließer durchaus alle gasisolierten Schaltanlagen der verschiedensten Größen und der unterschiedlichsten Einsatzgebiete ausgestattet werden.

## Patentansprüche

1. Störlichtbogenbegrenzer für eine gasisolierte Schaltanlage, insbesondere Mittelspannungs- Schaltanlage, mit einem gasgefüllten Druckbehälter (5), in dem drei Stromleiter (2, 3, 4) angeordnet sind, und mit einem druckbetätigten Auslösemechanismus, der auf eine Druckerhöhung im Druckbehälter (5) reagiert, **dadurch gekennzeichnet, dass** der mittlere (3) der drei Stromleiter (2, 3, 4) mindestens eine drehbar gelagerte und von dem Auslösemechanismus bei Druckerhöhung aus ihrer Anfangsstellung heraus bewegbare Kurzschlussbrücke (1) aufweist, die in ihrer Endstellung (9) alle drei Stromleiter (2, 3, 4) leitend miteinander verbindet.

2. Störlichtbogenbegrenzer nach Anspruch 1, **dadurch gekennzeichnet, dass** die Stromleiter (2, 3, 4) parallel im gleichen Abstand zueinander verlaufend angeordnet sind, und dass die Kurzschlussbrücke (1) und zumindest die mit ihr in Berührung kommenden Teile der Stromleiter (2, 3, 4) kontaktflächenartig ausgebildet sind.

3. Störlichtbogenbegrenzer nach Anspruch 1, **dadurch gekennzeichnet, dass** auf den äußeren Stromleitern (2, 4) U-förmige Einschlagkontakte angebracht sind.

4. Störlichtbogenbegrenzer nach Anspruch 1, **dadurch gekennzeichnet, dass** die Stromleiter (2, 3, 4) und die Kurzschlussbrücke (1) sich in dem metallgekapselten Bereich der Kabeleingangsfelder der Schaltanlage befinden.

5. Störlichtbogenbegrenzer nach Anspruch 1, **dadurch gekennzeichnet, dass** der Auslösemechanismus bei Druckerhöhung eine vorgespannte Schalterwelle (6) freigibt, die mittels eines Verbindungsgestänges (8) aus Isolierstoff die Kurzschlussbrücke (1) aus der Anfangsstellung in die Endstellung (9) dreht.

6. Störlichtbogenbegrenzer nach Anspruch 4, **dadurch gekennzeichnet, dass** die Schalterwelle (6) einen Hebel aufweist, der mit einem Ende des Verbindungsgestänges (8) verbunden ist, und dass die Kurzschlussbrücke (1) einen Hebel aufweist, der mit dem anderen Ende des Verbindungsgestänges (8) verbunden ist.

7. Störlichtbogenbegenzer nach einem der vorhergehenden Ansprüche, **dadurch gekennzeichnet, dass** die Stromleiter als Stromschienen (2, 3, 4) ausgebildet sind, und dass der Störlichtbogenbegrenzer mit einem Paar von Kurzschlussbrücken (1', 1'') ausgestattet ist, die im Kurzschlussfall die oberen und unteren Flächen der Stromschienen (2, 3, 4) kontaktieren.

8. Störlichtbogenbegenzer nach einem der vorhergehenden Ansprüche, **dadurch gekennzeichnet, dass** die Kurzschlussbrücke (1''') von zwei gegensinnig bewegten Teilleitern (1A; 1B) gebildet werden, die von dem mittleren Stromleiter (3') zu jeweils einem der äußeren Stromleiter (2', 4') schwenkbar angeordnet sind.

9. Störlichtbogenbegenzer nach einem der vorhergehenden Ansprüche, **dadurch gekennzeichnet, dass** die Stromleiter als Stromschienen (2', 3', 4') ausgebildet sind, und dass der Störlichtbogenbegrenzer mit einem Paar von Kurzschlussbrücken (1''', 1'''') ausgestattet ist, die im Kurzschlussfall die oberen und unteren Flächen der Stromschienen (2', 3', 4') kontaktieren, wobei jedes Paar von Kurzschlussbrücken (1'''; 1'''') von je zwei gegensinnig bewegten Teilleitern (1A; 1B) gebildet werden, die von dem mittleren Stromleiter (3') zu jeweils einem der äußeren Stromleiter (2', 4') schwenkbar angeordnet sind.

10. Gasisolierte Schaltanlage, insbesondere Mittelspannungs-Schaltanlage, mit einem oder mehreren Störlichtbogenbegrenzern, mit einem gasgefüllten Druckbehälter (5), in dem jeweils drei Stromleiter (2, 3, 4), angeordnet sind, und mit einem druckbetätigten Auslösemechanismus, der auf eine Druckerhöhung im Druckbehälter (5) reagiert, **dadurch gekennzeichnet, dass** der mittlere (3) der drei Stromleiter (2, 3, 4) mindestens eine drehbar gelagerte und von dem Auslösemechanismus bei Druckerhöhung aus ihrer Anfangsstellung heraus bewegbare Kurzschlussbrücke (1) aufweist, die in ihrer Endstellung (9) alle drei Stromleiter (2, 3, 4) leitend miteinander verbindet.

11. Schaltanlage nach Anspruch 10 , **dadurch gekennzeichnet, dass** der Störlichtbogenbegrenzer nach einem der Ansprüche 2 bis 9 ausgebildet ist.

## Claims

1. Stray arc limiter for a gas-insulated switchgear, in particular medium-voltage switchgear, comprising a gas-filled pressure vessel (5) in which three electric conductors (2, 3, 4) are arranged, and comprising a pressure-actuated trigger mechanism which responds to a pressure increase in the pressure vessel(5), **characterized in that** the middle (3) of the three electric conductors (2, 3, 4) has at least one rotatably mounted short-circuit bridge (1) which can be moved by the trigger mechanism in the event of a pressure increase out of its starting position and, in its end position (9), connects all three electric conductors (2, 3, 4) to one another in a conductive manner.

2. Stray arc limiter according to Claim 1, **characterized in that** the electric conductors (2, 3, 4) are arranged parallel to and at equal distances from one another, and **in that** the short-circuit bridge (1) and at least those parts of the electric conductors (2, 3, 4) which come into contact with it are formed so as to make contact over an area.

3. Stray arc limiter according to Claim 1, **characterized in that** U-shaped impact contacts are mounted on the outer electric conductors (2, 4).

4. Stray arc limiter according to Claim 1, **characterized in that** the electric conductors (2, 3, 4) and the short-circuit bridge (1) are present in the metal-encapsulated region of the cable entry fields of the switchgear.

5. Stray arc limiter according to Claim 1, **characterized in that**, in the event of a pressure increase, the trigger mechanism releases a pretensioned switch shaft (6) which rotates the short-circuit bridge (1) from the starting position to the end position (9) by means of a connecting rod (8).

6. Stray arc limiter according to Claim 4, **characterized in that** the switch shaft (6) has a lever which is connected to an end of the connecting rod (8), and **in that** the short-circuit bridge (1) has a lever which is connected to the other end of the connecting rod (8).

7. Stray arc limiter according to any of the preceding claims, **characterized in that** the electric conductors are in the form of bus bars (2, 3, 4), and **in that** the stray arc limiter is equipped with a pair of short-circuit bridges (1', 1'') which, in the case of a short circuit, make contact with the upper and lower surfaces of the bus bars (2, 3, 4).

8. Stray arc limiter according to any of the preceding claims, **characterized in that** the short-circuit bridge (1''') is formed by two part-conductors (1A; 1B) which move in opposite directions and are arranged so as to be pivotable from the middle electric conductor (3') to in each case one of the outer electric conductors (2', 4').

9. Stray arc limiter according to any of the preceding claims, **characterized in that** the electric conductors are in the form of bus bars (2', 3', 4'), and **in that** the stray arc limiter is equipped with a pair of short-circuit bridges (1''', 1''') which, in the case of a short circuit, make contact with the upper and lower surfaces of the bus bars (2', 3', 4'), each pair of short-circuit bridges (1''', 1'''') being formed by two part-conductors (1A; 1B) each which move in opposite directions and are arranged so as to be pivotable from the middle electric conductor (3') to in each case one of the outer electric conductors (2', 4').

10. Gas-insulated switchgear, in particular medium-voltage switchgear, comprising one or more stray arc limiters, comprising a gas-filled pressure vessel (5) in which in each case three electric conductors (2, 3, 4) are arranged, and comprising a pressure-actuated trigger mechanism which responds to a pressure increase in the pressure vessel (5), **characterized in that** the middle (3) of the three electric conductors (2, 3, 4) has at least one rotatably mounted short-circuit bridge (1) which can be moved by the trigger mechanism in the event of a pressure increase out of its starting position and, in its end position (9), connects all three electric conductors (2, 3, 4) to one another in a conductive manner.

11. Switchgear according to Claim 10, **characterized in that** the stray arc limiter is formed according to any of Claims 2 to 9.

## Revendications

1. Limiteur d'arcs électriques parasites pour une installation de distribution électrique isolée au gaz, en particulier une installation de distribution moyenne tension, comportant un réservoir sous pression (5) rempli de gaz, dans lequel sont agencés trois conducteurs (2, 3, 4), et comportant un mécanisme de déclenchement actionné par pression, lequel réagit à une augmentation de la pression dans le réservoir sous pression (5), **caractérisé en ce que** le conducteur central (3) parmi les trois conducteurs (2, 3, 4) présente au moins un shunt de court-circuit (1) monté de manière à pouvoir pivoter et pouvant être déplacé, en cas d'augmentation de la pression, en dehors de sa position de départ par le mécanisme de déclenchement, lequel shunt, dans sa position finale (9), relie entre eux de façon conductrice les trois conducteurs (2, 3, 4).

2. Limiteur d'arcs électriques parasites selon la revendication 1, **caractérisé en ce que** les conducteurs (2, 3, 4) sont agencés en s'étendant parallèlement les uns aux autres, à distance égale, et **en ce que** le shunt de court-circuit (1) et au moins les parties des conducteurs (2, 3 4) venant en contact avec ce dernier sont réalisés à surface de contact.

3. Limiteur d'arcs électriques parasites selon la revendication 1, **caractérisé en ce qu'**il est monté sur les conducteurs extérieurs (2, 4) des contacts de butée en forme de U.

4. Limiteur d'arcs électriques parasites selon la revendication 1, **caractérisé en ce que** les conducteurs (2, 3, 4) et le shunt de court-circuit (1) se situent dans la zone à enveloppe métallique des zones d'entrée de câbles de l'installation de distribution électrique.

5. Limiteur d'arcs électriques parasites selon la revendication 1, **caractérisé en ce que** le mécanisme de déclenchement, en cas d'augmentation de la pression, libère un arbre de commutateur (6) polarisé, lequel, par le biais d'une tige de liaison (8) en matière isolante fait tourner le shunt de court-circuit (1) depuis la position de départ dans la position finale (9).

6. Limiteur d'arcs électriques parasites selon la revendication 4, **caractérisé en ce que** l'arbre de commutateur (6) présente un levier qui est relié à une extrémité de la tige de liaison (8), et **en ce que** le shunt de court-circuit (1) présente un levier qui est relié à l'autre extrémité de la tige de liaison (8).

7. Limiteur d'arcs électriques parasites selon l'une des revendications précédentes, **caractérisé en ce que** les conducteurs sont réalisés sous la forme de barres conductrices (2, 3, 4) et **en ce que** le limiteur d'arcs électriques parasites est équipé d'une paire de shunts de court-circuit (1', 1") qui, en cas de court-circuit, mettent en contact les surfaces supérieures et inférieures des barres conductrices (2, 3, 4).

8. Limiteur d'arcs électriques parasites selon l'une des revendications précédentes, **caractérisé en ce que** les shunts de court-circuit (1''') sont constitués de deux sous-conducteurs (1A, 1B) qui se déplacent en sens opposé et qui sont agencés de façon à pouvoir pivoter depuis le conducteur central (3') vers l'un des conducteurs extérieurs (2', 4').

9. Limiteur d'arcs électriques parasites selon l'une des revendications précédentes, **caractérisé en ce que** les conducteurs sont réalisés sous la forme de barres conductrices (2', 3', 4') et **en ce que** le limiteur d'arcs électriques parasites est équipé d'une paire de shunts de court-circuit (1''', 1'''') qui, en cas de court-circuit, mettent en contact les surfaces supérieures et inférieures des barres conductrices (2', 3', 4'), chaque paire de shunts de court-circuit (1''', 1'''') étant constituée de deux sous-conducteurs (1A, 1B) se déplaçant en sens opposé et qui sont agencés de façon à pouvoir pivoter depuis le conducteur central (3') vers l'un des conducteurs extérieurs (2', 4').

10. Installation de distribution électrique isolée au gaz, en particulier installation de distribution moyenne tension, comportant un ou plusieurs limiteurs d'arcs électriques parasites, comportant un réservoir sous pression (5) rempli de gaz, dans lequel sont agencés trois conducteurs (2, 3, 4) et comportant un mécanisme de déclenchement actionné par pression, lequel réagit à une augmentation de la pression dans le réservoir sous pression (5), **caractérisée en ce que** le conducteur central (3) parmi les trois conducteurs (2, 3, 4) présente au moins un shunt de court-circuit (1) monté de façon à pouvoir pivoter et pouvant être déplacé, en cas d'augmentation de pression, par le mécanisme de déclenchement depuis sa position de départ, lequel, dans sa position finale (9), relie entre eux de façon conductrice les trois conducteurs (2, 3, 4).

11. Installation de distribution électrique selon la revendication 10, **caractérisée en ce que** le limiteur d'arcs électriques parasites est réalisé selon l'une des revendications 2 à 9.
